# EUROPÄISCHE PATENTSCHRIFT

(11) **EP 1 137 233 B1**
(45) Veröffentlichungstag und Bekanntmachung des Hinweises auf die Patenterteilung: **30.01.2002**
(21) Anmeldenummer: 00105670.4
(22) Anmeldetag: 17.03.2000
(51) Int. Cl.: H04L 29/06

(54) **Verfahren und Vorrichtung zur Identifizierung von Datenpaketen**
System and method for the identification of data packets
Méthode et appareil pour l'identification des paquets de données

(43) Veröffentlichungstag der Anmeldung: 26.09.2001
(73) Patentinhaber: Gehrke, Joachim, 21029 Hamburg (DE); Franz, Michael, 22337 Hamburg (DE)
(72) Erfinder: Gehrke, Joachim, 21029 Hamburg (DE); Franz, Michael, 22337 Hamburg (DE)
(74) Vertreter: Fleck, Thomas, Dr. Dipl.-Chem.

(56) Entgegenhaltungen:
- US-A- 5 115 433
- US-A- 5 771 459

## Beschreibung

Die Erfindung betrifft ein Verfahren zum Übertragen von Daten zwischen Sender und Empfänger innerhalb eines privaten oder öffentlich zugänglichen Netzwerkes in Form von Paketen unter Einsatz eines Netzwerkprotokolls, sowie eine Vorrichtung zur Durchführung dieses Verfahrens.

Vorrichtungen und Verfahren dieser Art sind beispielsweise in den US-A-5,771,459 und 5,115,433 beschrieben. Erstere beschreibt ein Kommunikationssystem, bei dem stationäre und zweite Teilnehmer über ein Radionetzwerk miteinander verbunden werden. Die zweitgenannte Druckschrift betrifft ein Paketnetzwerk-Leitwegverfahren- und -system, das auf geographischen Koordinatenidentifizierern basiert.

Der Aufbau einer Netzzwerkverbindung ist durch verschiedene Protokolle wie HTTP (Hypertext Transfer Protocol), das im www (world wide web) zum Einsatz gelangt, und weitere Normen gekennzeichnet. Im Internet werden Daten, die zwischen den Rechnern ausgetauscht werden, in einzelne kleine Pakete aufgeteilt, die beim Empfänger wieder zur ursprünglichen Datei zusammengesetzt werden. Damit alle Pakete in der richtigen Reihenfolge zusammengesetzt werden, und alle Pakete beim richtigen Empfänger landen, gibt es das TCP/IP-Protokoll (Transmission Control Protocol Internet Protokoll). Zusätzlich kommen besondere Protokolle zum Einsatz, z.B. das File Transfer Protocol kurz FTP, um Dateien von einem Rechner im Internet auf den PC vor Ort herunterzuladen. Alle haben eines gemeinsam: die Verbindung ist, solange sie besteht, statisch in ihren Adressen/Ports. Letzteres heißt, daß die Adressen von Sender und Empfänger solange gültig sind, wie die Verbindung besteht, was durch verschiedene Normen weltweit vereinheitlicht worden ist. Es handelt sich um normierte Protokolle, die den Hackern oder anderen dateninteressierten Gruppen Angriffsflächen zur Manipulation und Ausforschung bieten, was in der Zukunft noch zunehmen dürfte.

Der Erfindung liegt deshalb die Aufgabe zugrunde, die Übertragung von Daten und den Datenaustausch sicherer zu machen, so daß von vornherein unberechtigte Zugriffe unterbunden werden können.

Überraschenderweise läßt sich dieses beim eingangs genannten Verfahren dadurch erreichen, daß die in den Paketen enthaltenden Nutzdaten durch die Festlegung des Ortes von Sender und/oder Empfänger mittels eines globalen Positionierungssystems und der Sendezeit mittels einer Atomzeituhr ergänzend codiert und decodiert werden, wodurch eine Einmaligkeit des Übertragungsinhaltes entsteht.

Erfindungsgemäß wird also ein unabhängiges firmeneigenes Paket erzeugt, ohne daß die vorhandene Soft- und Hardware völlig geändert werden muß. Eingebettet in diesem Paket sind die Nutzdaten, die, anders gesagt, mit einem zeitgesteuerten und ortsabhängigen Code verschlüsselt sind. Die Verschlüsselungsbereiche sind so aufgebaut, daß Unbefugte keine Entschlüsselung des zu schützenden Datenstromes außerhalb von Sender und Empfänger vornehmen können.

Wenn normierte, nicht erfindungsgemäße Verbindungsversuche aus dem Internet oder dgl. kommen, werden diese durch das fehlende erfindungsgemäße Paket zu einem anderen Computer ggf. (Firewall) weitergeleitet, aussortiert oder blockiert.

Für den Fachmann dürfte es einleuchten, daß die Codierung und Decodierung einfach und schnell im Sekundentakt geändert werden kann, wodurch eine besonders hohe Sicherheit gewährleistet ist. Die gesicherten Datenpakete können somit auch das Internetrouting benutzen. Durch die zeitliche und örtliche Steuerungslogik werden automatisch Zeitfenster gesetzt. Sollten Datenpakete außerhalb dieses Zeitfensters liegen, werden sie als Fehler gezählt und verworfen.

Weitere Vorteile und Merkmale gehen aus den vorstehenden Unteransprüchen hervor, die auch gemeinsam mit dem Hauptanspruch von erfinderischer Bedeutung sein können, wobei besonders auf den nebengeordneten Vorrichtungsanspruch hingewiesen wird, der eine Lösungsmöglichkeit für die Durchführung des erfindungsgemäßen Verfahrens bietet.

Im folgenden wird ein Ausführungsbeispiel anhand der Zeichnung zum besseren Verständnis der Erfindung näher erläutert. Es dürfte einleuchten, daß die vorliegende Erfindung nicht auf das im folgenden gezeigte und beschriebene Beispiel beschränkt ist. Es wird hierzu ausdrücklich auf den Hauptanspruch verwiesen.

Es zeigt:
- Fig. 1: eine Schemaskizze des erfindungsgemäßen Verfahrensablaufes beim Senden und
- Fig. 2: eine Schemaskizze des erfindungsgemäßen Verfahrensablaufes beim Empfang der gesicherten Daten;
- Fig. 3: eine detailliertere Schemaskizze, die den erfindungsgemäßen Verfahrensablauf im Ausschnitt hinsichtlich der zusätzlichen Codierung mit Ort und Zeit zeigt.

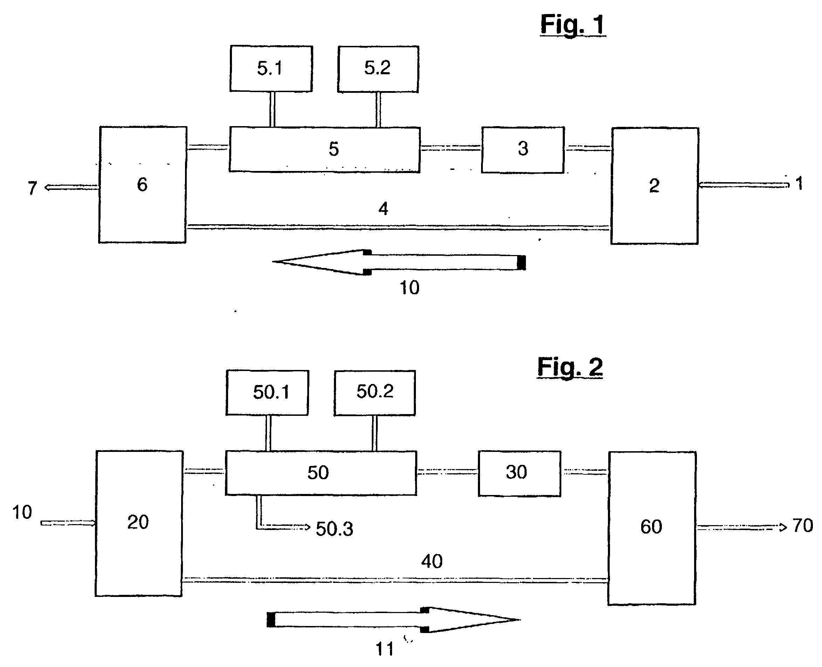

In Fig. 1 ist mit dem Bezugszeichen 1 allgemein der Dateneingang von einem nicht gezeigten, ungesicherten Netzwerk (Server) bezeichnet. Eine Vorrichtung 2 empfängt diese Daten und trennt sie in Nutzdaten und Standardrahmen auf, der aus einem Kopfteil und Anhang besteht. Der Kopfteil enthält:
- ein Aufmerksamkeitssignal, das auf die Übertragung eines Pakets hinweist,
- die Quelladresse,
- die Zieladresse,
- Taktinformationen zur Synchronisation der Übertragung.

Die Nutzdaten stellen die eigentlich zu übertragenden Daten dar. Dieser Teil des Pakets kann abhängig vom Netzwerk verschiedene Längen haben. Der die Daten enthaltende Abschnitt reicht bei den meisten Netzwerken von 512 Byte (0,5 KB) bis 4 KB.

Da die meisten Datenblöcke länger als 4 KB sind, müssen die Daten in kleinere Blöcke zerlegt werden, um in die Pakete zu passen. Die Übertragung einer großen Datei erfordert eine Vielzahl von Paketen.

Der genaue Inhalt des Anhangs hängt von der verwendeten Übertragungsmethode, dem Protokoll, ab. In der Regel enthält der Anhang Daten zur Fehlerüberprüfung, die mit Hilfe der sogenannten zyklischen Blockprüfung (Cyclical Redundancy Check, CRC) berechnet werden. Die Berechnung des CRC erfolgt im Quell- und im Zielcomputer. Stimmen die beiden Ergebnisse überein, kann von einer fehlerfreien Übertragung ausgegangen werden. Andernfalls sind die Daten während der Übertragung verändert worden. In diesem Fall fordert die zyklische Blockprüfung den Quellcomputer auf, die Daten erneut zu übertragen. Der Standardrahmen wird über die Leitung 4 direkt zu einer Vorrichtung zum Zusammensetzen des Standardrahmens und der durch Ort und Zeit erweiterten, codierten Nutzdaten geführt, wie dieses durch den Pfeil 10 angedeutet ist. Die Nutzdaten werden von der Vorrichtung 2 zum Trennen zu einer Codiervorrichtung 3 und dann zu einer Vorrichtung 5 weitergeleitet, die ihrerseits mit einem GPS-Empfangssystem 5.1 und einer Atomzeituhr mit Antenne 5.2 verbunden ist und die codierten Nutzdaten zusätzlich mit einem GPS- und Zeitzusatzcode versieht. Von dieser Vorrichtung 5 werden die somit dreifach codierten Nutzdaten zu einer Vorrichtung 6 zum Zusammensetzen des Standardrahmens und der dreifach codierten Nutzdaten geführt, so daß ein gesicherter Datenausgang 7 in das Netzwerk erfolgen kann. Hierbei kann es sich zum Beispiel um das sog. Internet handeln.

In Fig. 2 wird der erfindungsgemäße Verfahrensablauf beim Empfang der erfindungsgemäß in Fig. 1 codierten Daten beschrieben, wobei im Prinzip in umgekehrter Reihenfolge vorgegangen wird, was durch die entgegengesetzte Pfeilrichtung 11 angedeutet ist.

Es dürfte einleuchten, daß der Datenausgang 7 direkt oder indirekt mit dem Dateneingang 10 des Empfängers verbunden ist. In der Vorrichtung 20 erfolgt die Trennung der Daten in Standardrahmen und durch Ort und Zeit erweiterte codierte Nutzdaten. Über die Leitung 40 wird dann der Standardrahmen zur Vorrichtung 60 zum Zusammensetzen des Standardrahmens und der Nutzdaten geführt, während die erweiterten, codierten Nutzdaten der Vorrichtung 30 zugeführt werden, wonach bei erfolgreicher Plausibilitätsprüfung und Kontrolle der Nutzdaten die Abtrennung der (GPS) Orts- und Zeitdaten in die übrig gebliebenen codierten Nutzdaten erfolgt, die zur Vorrichtung 30 für die Decodierung der Nutzdaten und letztendlich zur Vorrichtung 60 zum Zusammensetzen derselben mit dem Standardrahmen zugeführt werden. Mit 50.3 ist ein Datenausgang der Vorrichtung 50 bezeichnet, die nach Plausibilitätsprüfung und Kontrolle der Daten solche abtrennt, die diese Prüfung und Kontrolle nicht bestanden haben und auf Hackerangriffe und dgl. zurückzuführen sind. Die Abtrennungsvorrichtung 50 ist wie in Fig. 1 gleichermaßen mit einem GPS-Empfangssystem mit Antenne 50.1 sowie einer Atomzeituhr mit Antenne 50.2 verbunden. Bei erfolgreicher Plausibilitätsprüfung und Kontrolle der dreifach codierten Daten erfolgt die Abtrennung der Orts- und Zeitdaten von den übrig gebliebenen codierten Nutzdaten, die zur Vorrichtung 30 weitergegeben werden, wo die Nutzdaten dann decodiert werden, die dann durch die Vorrichtung 60 wiederum mit dem über die Leitung 40 zur Vorrichtung 60 gelangten Standardrahmen zusammengesetzt werden, so daß der Datenausgang 70 in das ggf. ungesicherte Netzwerk erfolgen kann.

Es dürfte einleuchten, daß das Senden und der Empfang der Daten im Prinzip spiegelbildlich erfolgt.

Die einzelnen Vorrichtungen, Einrichtungen oder Geräte, die vorstehend beim erfindungsgemäßen Verfahrensablauf eingesetzt werden,' sind im Prinzip im Handel erhältlich (siehe anhängende Liste). Ihre Kombination in der vorliegenden Form ist jedoch noch nicht beschrieben worden. Sie ermöglicht nicht nur die fehlerfreie Übertragung von Daten, sondern macht auch den Datenaustausch selbst in jeder Weise sicher, so daß unberechtigte Zugriffe von dritter Seite abgewehrt werden.

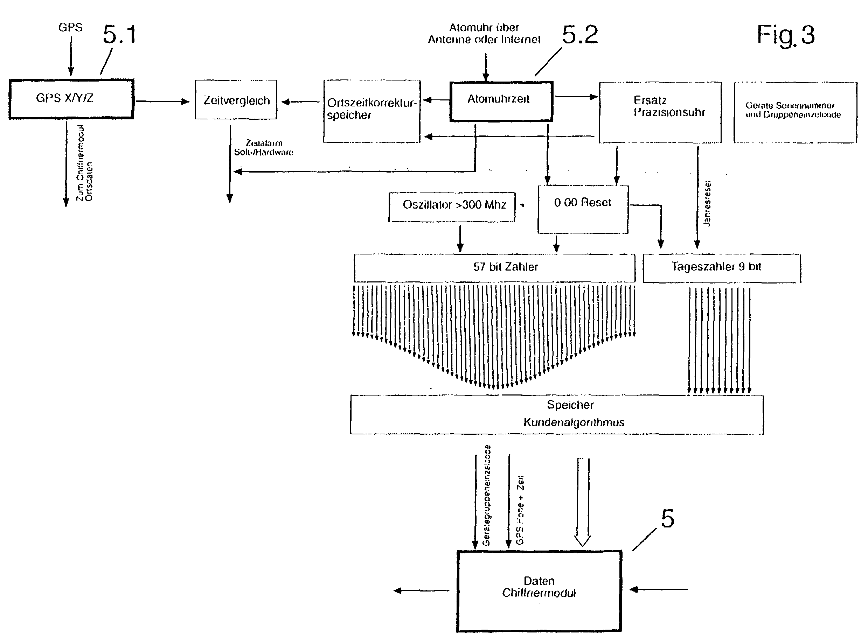

In Fig. 3 ist schematisch eine besondere Ausführungsform für den Einsatz der Atomuhrzeit 5.2 beschrieben, während die mittels GPS 5.1 ermittelten Ortsdaten ohne weitere Bearbeitung der Vorrichtung 5 zugeführt werden, bei der es sich um einen Datenchiffriermodul handelt.

Der zweite Code ist ein mathematisch zeitlicher, der nur den Kunden vorbehalten sein soll und unter Einhaltung gewisser Rahmenbedinungen individuell gestaltet werden kann. Die Ortszeit wird dabei nicht nach den typischen Zeitzonen der Erde berechnet. Vielmehr wird das Jahr in 57 + 9 Bit aufgelöst, 24 Stunden = 140 Minuten = 86.400 Sekunden = 86,4⁶ Millisekunden usw., dadurch ist es für jeden Tag und jede Zeit möglich, einen individuellen Chiffriercode anzugeben. Durch die zeitliche Steuerung des Grundoszillators werden der Kundenalgorithmus abgerufen und die Daten chiffriert. Die Anzahl der Chiffrier- oder Codiermöglichkeiten entsprechen dem Zähler (2⁵⁷ + 2⁹)/24 Stunden x 365 Tage. In diesem Beispiel mit einem Oszillator von 300MHz können 150 Mio. verschiedene Chiffrierungen oder Codierungen pro Sekunde durchgeführt werden. Die theoretische Grenze mit 57 Bit pro Tag würde bei voller Auflösung einem Oszillator von 1668 GHz entsprechen.

Das globale Positionierungssystem (GPS), welches erfindungsgemäß eingesetzt wird, ermöglicht durch Strom, Licht, Funk, Schall, Magnetismus eine genaueste Ortsbestimmung der Raumvektoren X, Y und Z. Die erfindungsgemäße Verwendung einer Atomzeituhr ermöglicht eine äußerst präzise Festlegung von Datum und Uhrzeit bis hin zu Nanosekunden, so daß Dritte selbst bei ungefährer Kenntnis des Absende- und/oder Empfangsortes und der Zeit dennoch nicht dazu in der Lage sind, die Dreifachcodierung der Nutzdaten zu entschlüsseln.

In einer weiteren Ausführungsform der Erfindung, die bei Standleitungen Anwendung findet, werden ausschließlich Nutzdaten übertragen, und zwar ohne Kopfteil und Anhang. Es dürfte für den Fachmann dann einleuchten, daß das "Paket" nur Nutzdaten enthält, die erfindungsgemäßer Weise dann ergänzend codiert bzw. decodiert werden.

## Patentansprüche

1. Verfahren zum Übertragen von Daten zwischen Sender und Empfänger innerhalb eines privaten oder öffentlich zugänglichen Netzwerkes in Form von Paketen unter Einsatz eines Netzwerkprotokolls, **dadurch gekennzeichnet, daß** die in den Paketen enthaltenen Nutzdaten durch die Festlegung des Ortes von Sender und/oder Empfänger mittels eines globalen Positionierungssystem und der Sendezeit mittels einer Atomzeituhr ergänzend codiert und decodiert werden, wodurch eine Einmaligkeit des Übertragungsinhaltes entsteht.

2. Verfahren nach Anspruch 1, **dadurch gekennzeichnet, daß** vor der zusätzlichen örtlichen und zeitlichen Codierung und Decodierung der Nutzdaten das Paket in Nutzdaten und Standardrahmen geteilt wird, wobei der Standardrahmen Kopfteil mit Adresse von Sender und Empfänger und den Anhang mit dem Protokoll enthält.

3. Verfahren nach Anspruch 1 und 2, **dadurch gekennzeichnet, daß** hinsichtlich der Koordinaten X, Y und Z von Sender und/oder Empfänger mindestens m- bis mm genau und zeitlich hinsichtlich Datum und Uhrzeit mindestens sekundengenau während der Übertragung des Paketes festgelegt werden.

4. Verfahren nach Anspruch 1, **dadurch gekennzeichnet, daß** gleichzeitig zur Festlegung von Ort und Sendezeit eine Komprimierung der Daten erfolgt.

5. Verfahren nach Anspruch 1 und 4, **dadurch gekennzeichnet, daß** ein individuell wählbarer weiterer Zusatzcode zu den codierten Orts- und Zeitdaten ergänzt wird.

6. Verfahren nach Anspruch 1 bis 5, **dadurch gekennzeichnet, daß** die Sendezeit in differenzierte Zeitzonen mit 1° Auflösung unterteilt wird.

7. Verfahren nach Anspruch 1, **dadurch gekennzeichnet, daß** die Daten nur hinsichtlich der örtlichen geographischen Höhe und zeitlich von Sender und/oder Empfänger codiert und decodiert werden.

8. Vorrichtung zur Durchführung des Verfahrens zum Übertragen von Daten zwischen Sender und Empfänger innerhalb eines privaten oder öffentlich zugänglichen Netzwerkes in Form von Paketen unter Einsatz eines Netzwerkprotokolls nach einem oder mehreren der vorstehenden Ansprüche 1 bis 7, **dadurch gekennzeichnet, daß** eine Vorrichtung (2) derart ausgestaltet ist, daß diese Daten von einem Server empfängt (1) und diese in Nutzdaten und Standardrahmen auftrennt und die Nutzdaten zu einer Codiervorrichtung (3) und einer Vorrichtung (5) weiterleitet, die ihrerseits mit einem GPS-Empfangssystem (5.1) und einer Atomzeituhr mit Antenne (5.2) verbunden ist und die codierten Nutzdaten mit einem GPS- und Zeitzusatzcode versieht, wonach die derart codierten Nutzdaten von der Vorrichtung (5) zu einer Vorrichtung (6) zum Zusammensetzen des Standardrahmens und der codierten Nutzdaten geführt und über einen Datenausgang (7) in das Netzwerk abgegeben werden, und daß diese Daten beim Empfänger über den Dateneingang (10) in der Vorrichtung (20) in Standardrahmen und durch Ort und Zeit erweiterte codierte Nutzdaten getrennt werden, wobei der Standardrahmen über die Leitung (40) zur Vorrichtung (60) beim Zusammensetzen derselben mit den in der Vorrichtung (30) decodierten Nutzdaten übertragen werden, wobei zwischen den Vorrichtungen (20) und (30) eine Vorrichtung (50) vorgesehen ist, die mit einem GPS-Empfangssystem (50.1) mit Antenne (50.2) und einem Datenausgang (50.3) versehen ist, durch den nach Plausibilitätsprüfung Daten abgetrennt werden, welche die Prüfung nicht bestanden haben.

## Claims

1. Method for transmitting data between transmitters and receivers within a privately or publicly accessible network in the form of packets using a network protocol, **characterized in that** the useful data contained in the packets are additionally coded and decoded by fixing the location of the transmitters and/or receivers using a global positioning system and the transmitting time by means of atomic clock, so that a uniqueness of the transmission content is obtained.

2. Method according to claim 1, **characterized in that** prior to the additional local and time coding and decoding of the useful data, the packet is subdivided into useful data and standard frames, the standard frame containing a heading with the address of transmitters and receivers and the appendix with the protocol.

3. Method according to claim 1 and 2, **characterized in that** with respect to the coordinates X, Y and Z of transmitters and/or receivers fixing takes place at least m to mm-precise and at least time second-precise with respect to the data and clock time during the transmission of the packet.

4. Method according to claim 1, **characterized in that** a data compression takes place simultaneously with the fixing of the place and transmitting time.

5. Method according to claims 1 and 4, **characterized in that** an individually selectable, further additional code is added to the coded place and time data.

6. Method according to claims 1 to 5, **characterized in that** the transmitting time is subdivided into differentiated time zones with a one 1° resolution.

7. Method according to claim 1, **characterized in that** the data are only coded and decoded with respect to the local geographical altitude and on a time basis by transmitters and/or receivers.

8. Apparatus for performing the method for transmitting data between transmitters and receivers within a privately or publicly accessible network in the form of packets using a network protocol according to one or more of the preceding claims 1 to 7, **characterized in that** a device (2) is constructed in such a way that it receives data from a server (1) and subdivides the same into useful data and standard frames and the useful data are routed to a coding device (3) and a device (5), which is in turn connected to a GPS reception system (5.1) and an atomic clock with antenna (5.2) and provides the coded useful data with a GPS and time addition code, after which the thus coded useful data are passed by the device (5) to a device (6) for the assembly of the standard frame and the coded useful data and delivered by means of a data output (7) to the network, and that said data are separated at the receiver by means of the data input (10) in the device (20) into standard frames and place and time-extended, coded useful data, the standard frame being transmitted by means of the line (40) to the device (60) for the assembly thereof with the useful data decoded in the device (30) and between the devices (20) and (30 is provided a device (50), which is provided with a GPS reception system (50.1) with antenna (50.2) and a data output through which, after plausibility checks, data are separated which have failed to satisfy the check.

## Revendications

1. Procédé de transmission de données entre émetteur et récepteur à l'intérieur d'un réseau privé ou accessible de façon publique sous la forme de paquets, en utilisant un protocole de réseau, **caractérisé en ce que** les données utiles contenues dans les paquets sont codées et décodées de façon complémentaire par la détermination du lieu de l'émetteur et/ou du récepteur au moyen d'un système de positionnement global et de l'heure d'émission au moyen d'une horloge atomique, ce qui crée un caractère unique du contenu de l'émission.

2. Procédé selon la revendication 1, **caractérisé en ce qu'**avant le codage et le décodage supplémentaires du lieu et de l'heure des données utiles, le paquet est divisé en données utiles et trame standard, la trame standard contenant l'en-tête avec l'adresse de l'émetteur et du récepteur et l'annexe avec le protocole.

3. Procédé selon la revendication 1 et 2, **caractérisé en ce que** les coordonnées X, Y et Z de l'émetteur et/ou du récepteur sont fixées au moins avec une précision de m- à mm, et pour la date et l'heure, sont fixées au moins avec une précision de secondes, pendant la transmission du paquet.

4. Procédé selon la revendication 1, **caractérisé en ce qu'**en même temps que la détermination du lieu et de l'heure d'émission, une compression des données est effectuée.

5. Procédé selon la revendication 1 et 4, **caractérisé en ce qu'**un autre code supplémentaire pouvant être sélectionné individuellement est ajouté aux données codées de lieu et d'heure.

6. Procédé selon les revendications 1 à 5, **caractérisé en ce que** l'heure d'émission est subdivisée en fuseaux horaires différenciés avec une résolution de 1°.

7. Procédé selon la revendication 1, **caractérisé en ce que** les données sont codées et décodées par l'émetteur et/ou le récepteur uniquement quant à l'altitude géographique locale, et quant à l'heure.

8. Dispositif pour mettre en oeuvre le procédé de transmission de données entre émetteur et récepteur à l'intérieur d'un réseau privé ou accessible de façon publique, sous la forme de paquets en utilisant un protocole de réseau selon l'une ou plusieurs des revendications précédentes 1 à 7, **caractérisé en ce qu'**un dispositif (2) est réalisé de telle sorte qu'il reçoive (1) des données d'un serveur et les sépare en données utiles et trame standard et transmet les données utiles à un dispositif de codage (3) et à un dispositif (5), qui à son tour est relié à un système de réception GPS (5.1) et à une horloge atomique avec une antenne (5.2) et fournit aux données utiles codées un code supplémentaire GPS et horaire, après quoi les données utiles ainsi codées sont amenées par le dispositif (5) à un dispositif (6) de combinaison de trame standard et de données utiles codées et sont transmises à travers une sortie de données (7) au réseau, et **en ce que** ces données sont séparées au niveau du récepteur à travers l'entrée de données (10) dans le dispositif (20) en trame standard et en données utiles codées étendues par le lieu et l'heure, la trame standard étant transmise sur la ligne (40) jusqu'au dispositif (60) lors de sa combinaison avec les données utiles décodées dans le dispositif (30), un dispositif (50) étant prévu entre les dispositifs (20) et (30) qui est muni d'un système de réception GPS (50.1) avec une antenne (50.2) et une sortie de données (50.3) à travers laquelle, après un contrôle de vraisemblance, les données ayant échoué au contrôle sont séparées.
